# EUROPEAN PATENT SPECIFICATION

(11) **EP 2 406 546 B1**
(45) Date of publication and mention of the grant of the patent: **23.12.2015**
(21) Application number: 10707981.6
(22) Date of filing: 26.02.2010
(51) Int. Cl.: F23G 7/06, F23J 15/02, F23C 9/00

(54) **EXHAUST GAS CLEANING APPARATUS AND METHOD FOR CLEANING AN EXHAUST GAS**
ABGASREINIGUNGSVORRICHTUNG UND VERFAHREN ZUR ABGASREINIGUNG
APPAREIL DE NETTOYAGE DE GAZ D'ÉCHAPPEMENT ET PROCÉDÉ DE NETTOYAGE DE GAZ D'ÉCHAPPEMENT

(30) Priority: 27.02.2009 GB 0903447
(43) Date of publication of application: 18.01.2012
(73) Proprietor: Alfa Laval Aalborg A/S, 9000 Aalborg (DK)
(72) Inventor: ØVREBØ, Dag, N-3921 Porsgrunn (NO); KRISTIANSEN, Kåre, N-3738 Skien (NO)
(74) Representative: Alfa Laval Attorneys
(86) International application number: PCT/NO2010/000075
(87) International publication number: WO 2010/098677

(56) References cited:
- EP-A1- 1 967 711
- EP-A2- 1 533 494
- WO-A1-00/06948
- WO-A1-2005/064237
- WO-A1-2009/028957
- GB-A- 2 408 470
- US-A1- 2005 274 107

## Description

The present invention relates to an exhaust gas cleaning apparatus and a method for the cleaning of exhaust gas which originates from a combustion process. The exhaust gas cleaning apparatus and the related method is particularly suitable for removing unwanted combustion products like NOx, hydrocarbons and soot which is present in the exhaust gas. The present invention also relates to the use of a cold flame gas to remove NOx and particulate matter from an exhaust gas.

The cold flame is a phenomenon which has so far not received much attention. In a cold flame the fuel is partially oxidized in preheated air and the temperature is kept constant at about 450°C. The temperature is independent of air/fuel ratio and residence time. In the cold flame process, only 2-20% of the calorific value of the fuel is released, and this heat is used to evaporate the fuel, resulting in a homogenous gaseous fuel. Such a gaseous fuel is hereafter called a cold flame gas. A definition of a cold flame gas may then be a gas which is formed by partial oxidation of a hydrocarbon (fuel) in a mixture of air and hydrocarbon and wherein only a relatively small fraction of the air (5-10% of the air) is consumed in the oxidation.

A more complete description of the cold flame gas phenomenon can be found in the American patent US 6793693 B1.

US2005/0274107 discloses a reformer such as a catalytic partial oxidizer with a peak temperature of between 1050 and 1250°C where the output from the reformer is used for treatment of an exhaust. Upstream the reformer a liquid fuel is atomized and mixed with a source of oxygen and moisture.

EP1533494A2 discloses a vehicle with a combustion engine and auxiliary power unit, wherein a cold flame product is fed to the combustion engine or the auxiliary power unit or both. This document discloses the preamble of independent claim 1.

In WO2009/028957 a particle filter assembly and a method for cleaning a particle filter is disclosed. The assembly comprises a cold flame vaporizer for forming cold flame gas and in fluid communication with an exhaust conduit such that the cold flame gas flows through the particle filter and removes deposits of soot therein.

During developmental work on the use of cold flame gas, carried out by the applicant, it was at first observed that the cold flame gas was able to remove carbon deposits from the reactor walls. As the applicant continued the work on applications utilizing the cold flame gas it was further discovered that the cold flame gas has oxidizing as well as reducing properties. The reason for this has not been firmly established yet, but is thought to be due to free radicals that are present in the cold flame gas, i.e. the partially oxidized, gaseous fuel.

Exhaust gas from combustion engines may contain impurities such as particulate matter (soot), NOx and incomplete combustion products, i.e. hydrocarbons (HC) and CO. The incomplete combustion products can be removed by an oxidation catalyst, while particulate matter can be removed from the exhaust gas with a particle filter. NOx can be removed catalytically from the exhaust gas if the exhaust gas is slightly reducing (as in an Otto engine) or otherwise by an NOx absorber (for instance for exhaust gas from a compression ignition engine).

For a complete treatment of the exhaust gas a particle filter, an NOx absorber and a oxidation catalyst are used today. After some time in use, the particle filter and the NOx absorber must be regenerated. Such a cleaning process requires two operations since the particle filter is regenerated under high temperature (about 600 °C) in an oxidizing environment while the NOx absorber is regenerated at lower temperatures in a reducing environment (about 500 °C with CO gas).

Hence, the objective of the present invention is therefore to provide a simplified apparatus and a simplified method for the treatment of exhaust gas from a combustion process.

More specifically, it is an objective of the present invention to provide a simplified apparatus and a simplified method to remove impurities like NOx, particulate matter and hydrocarbons from exhaust gas from a combustion process.

These objectives are achieved by the present invention as defined in the independent claims. Further embodiments of the present invention are defined in the dependent claims.

Impurities are in the description and in the claims defined to include soot particles, NOx (nitrogen oxides), hydrocarbons and other substances that can be removed (oxidized or reduced) by the cold flame gas.

There is provided an exhaust gas cleaning apparatus for cleaning of exhaust gas which originates from a combustion process in a combustion chamber as defined in claim 1.

The combustion chamber may be part of an internal combustion engine, for example a compression ignition engine (imprecisely called a diesel engine) or an Otto-engine. The exhaust gas is removed from the combustion chamber through an exhaust flow path like for example a conduit, a pipe, a tube or any other suitable means for conducting the exhaust gas. The combustion chamber may also be part of an incineration plant or a power plant based on a combustion process of for example coal or any other combustible material. Other areas of use of the present invention are also easily conceivable. The combustion chamber is the place wherein the combustion of the combustible material takes place producing the exhaust gas which needs cleaning. The combustion chamber may obviously take many different forms depending on the technical field of use, i.e. in an engine, an incineration plant, a power plant etc. If the combustible matter being combusted in the combustion chamber is not in liquid or gas form, which may be the case in an incineration plant or a power plant, the exhaust gas cleaning apparatus preferably includes feeding means (not shown in the figures) for feeding the combustible matter into the combustion chamber. In this case, the fuel tank preferably feeds hydrocarbon fuel to the cold flame gas generator only.

The invention comprises a cold flame gas supply which is connected to the exhaust flow path with a fluid line such that the cold flame gas may be injected into the exhaust gas flowing in the exhaust flow path. The fluid line is preferably provided with the necessary valve means such that injection of cold flame gas into the exhaust flow path can be regulated. The cold flame gas generator may be regulated by adjusting the amount of fuel and/or air which is fed to the cold flame gas generator. The valve means are preferably automatically controlled based on measurements of temperature and/or pressure and/or measurements related to the composition of the exhaust gas taken at one or several positions in the exhaust gas flow path.

The exhaust gas and the cold flame gas are mixed in a mixing chamber in the exhaust flow path. The mixing chamber can simply be a portion of the exhaust flow path itself as long as an efficient mixing of the exhaust gas and the cold flame gas is ensured. Alternatively, the exhaust gas flow path can be provided with a mixing chamber through which the exhaust gas flows and in which the cold flame gas and the exhaust gas is mixed. The mixing chamber can be configured as a conduit with an increased diameter or cross sectional area as compared to the same of the exhaust gas flow path. Alternatively, the mixing chamber can be configured as a larger container to which the exhaust gas flow path is connected. The cold flame gas is preferably injected into the exhaust flow path upstream the mixing chamber, or into an upstream end portion of the mixing chamber, relatively close to the point where the exhaust gas enters the mixing chamber.

In an embodiment of the invention there is provided mixing means in the mixing chamber, i.e. either in the exhaust flow path or in the mixing chamber, for enhanced mixing of the exhaust gas and the cold flame gas. Such mixing means can comprise a porous material through which the exhaust gas and the cold flame gas flow and are thereby getting mixed. The mixing means may also comprise blades or similar devices which are arranged in the mixing chamber and which are arranged such that the mixing means causes turbulence in the flow and thereby a more efficient mixing of the exhaust gas and the cold flame gas. A more even mix of exhaust gas and cold flame gas results in more efficient chemical reactions between components of the cold flame gas on one hand and the impurities in the exhaust gas on the other hand. The result is that a large part of the impurities can be removed from the exhaust gas by the cold flame gas.

The cold flame gas supply comprises a cold flame gas generator which is arranged in fluid communication with the exhaust gas flow path. Cold flame generators will be known to a skilled person in the art and their construction are not explained any further here. The cold flame gas generator may be placed outside the exhaust gas flow path in which case there are separate supply fluid lines for air and hydrocarbon fuel to the cold flame gas generator. Alternatively, the cold flame gas generator is arranged within the exhaust gas flow path. A separate supply fluid line for hydrocarbon fuel is then provided. Oxygen for the cold flame gas generator is in this case preferably supplied through air in the exhaust gas, or alternatively through a separate supply fluid line for air providing air from outside the exhaust gas flow path. If the cold flame gas generator is arranged outside the exhaust gas flow path, the air supply may be preheated by using a heat exchanger which utilizes the heat energy contained in the exhaust gas to preheat the air.

The cold flame gas supply also comprises a reservoir for cold flame gas where the reservoir can be arranged in fluid communication with the cold flame gas generator and the exhaust gas flow path through fluid lines. The reservoir itself may be configured as an inline conduit with a larger inner diameter than the fluid line connecting the cold flame gas generator and the exhaust gas flow path. The length of the reservoir conduit should be decided according to the desired storing capacity of the reservoir. Alternatively, the reservoir may be configured as a separate tank, which may be suitable when a larger quantity of cold flame gas needs to be stored. For both these alternatives, there is preferably provided a bypass fluid line such that the cold flame gas can flow directly from the cold flame gas generator to the exhaust gas flow path without passing through the reservoir. Preferably there is also provided valve means in the fluid lines, including any bypass fluid line, which regulates the flow of cold flame gas from the cold flame gas generator to the reservoir and/or to the exhaust gas flow path, and from the reservoir to the exhaust gas flow path. The exhaust gas flow path can therefore receive a controllable quantity of cold flame gas.

According to the invention the reservoir comprises heating means such that the temperature of the cold flame gas which is stored in the reservoir is kept above the condensation point of the cold flame gas. The heating means may comprise a heat exchanger and fluid lines connecting the heat exchanger and the exhaust gas flow path such that the cold flame gas can be heated by the exhaust gas. Preferably there is also provided valve means in the fluid lines such that the temperature of the cold flame gas can be kept within a desired temperature interval, which is above the condensation point of the cold flame gas.

In a further embodiment of the invention the exhaust gas is used to heat the cold flame gas generator. This can be done in the same way as the cold flame gas reservoir is heated, as explained above.

Alternatively, it would be possible to heat the reservoir and the cold flame gas generator by other means, like for example one or more electric heaters.

In a further embodiment of the exhaust gas cleaning apparatus further comprises an exhaust gas return loop (EGR-loop) through which a part of the exhaust gas flowing in the exhaust flow path can be returned to the combustion chamber. The EGR-loop comprises a fluid line which preferably extends from the exhaust gas flow path downstream the mixing zone and to the combustion chamber. The fluid line is preferably provided with valve means such that the amount of exhaust gas which is returned to the combustion chamber can be regulated. Generally, up to 40% of the exhaust gas may be returned through the EGR-loop.

In a further embodiment of the invention the EGR-loop comprises a EGR-loop particle filter such that any particular matter like soot particles, which has not been oxidized by the cold flame gas, can be removed. In order to facilitate the regeneration of the EGR-loop particle filter, it is arranged in fluid communication with the cold flame gas supply. The fluid communication can be effected by fluid lines extending from the reservoir for cold flame gas or the cold flame gas generator to the EGR-loop particle filter. Preferably there is provided valve means in fluid line such that the flow of cold flame gas to EGR-loop particle filter can be controlled and regulated.

In a further embodiment of the invention the exhaust gas flow path is also provided with an exhaust gas flow path particle filter such that the exhaust gas flows through the exhaust gas flow path particle filter before the cold flame gas is injected into the exhaust gas flow path. At least a part of the particulate matter, like soot-particles, can then be removed from the exhaust gas before cold flame gas is injected into the exhaust gas. The exhaust gas flow path particle filter may further be arranged in fluid communication with the cold flame gas supply such that the exhaust gas flow path particle filter can be regenerated by the cold flame gas. The fluid communication can be effected by fluid lines extending from the reservoir for cold flame gas or the cold flame gas generator to the exhaust gas flow path particle filter. Preferably there is provided valve means in fluid line such that the flow of cold flame gas to exhaust gas flow path particle filter can be controlled and regulated.

For a more comprehensive explanation of how particle filters may be regenerated using cold flame gas, reference is made to the applicant's own international patent applications PCT/NO2008/000309 and PCT/NO2008/00310.

In a further embodiment of the invention an oxidation catalyst is provided in the exhaust gas flow path downstream the EGR-loop. The oxidation catalyst will remove the hydrocarbons and CO which were not oxidized by the cold flame gas.
In order to regulate the temperature in the oxidation catalyst and to ensure that there is enough oxygen present for the oxidation process in the oxidation catalyst, the exhaust gas flow path may be provided with air supply means upstream the oxidation catalyst such that air is fed into the exhaust gas flow path before the exhaust gas enters the oxidation catalyst.

There is also provided a method for cleaning an exhaust gas which originates from a combustion process in a combustion chamber, where the exhaust gas is flowing in an exhaust gas flow path which is arranged in fluid communication with the combustion chamber. The method is defined in claim 11.

The combustion chamber may be part of an internal combustion engine, for example a compression ignition engine (imprecisely called a diesel engine) or an Otto-engine. The exhaust gas is removed from the combustion chamber through an exhaust flow path like for example a conduit, a pipe, a tube or any other suitable means for conducting the exhaust gas. The combustion chamber may also be part of an incineration plant or a power plant based on a combustion process of for example coal or any other combustible material. Other areas of use of the present invention are also easily conceivable. The combustion chamber is the place wherein the combustion of the combustible material takes place producing the exhaust gas which needs cleaning. The combustion chamber may obviously take many different forms depending on the technical field of use, i.e. in an engine, an incineration plant, a power plant etc.

In further embodiment of the invention the method may include the step of providing a mixing chamber through which the exhaust gas is flowing and injecting the cold flame gas such that the cold flame gas and the exhaust gas in the mixing chamber.

In an embodiment of the invention the method may include the step of providing mixing means for enhanced mixing of the exhaust gas and the cold flame gas. As explained above, such mixing means may include a porous material that the exhaust gas and the cold flame gas passes through in such a way that the two gases are mixed. Alternatively, blades or other types of mechanical mixing means may be provided in the mixing chamber such that there is created turbulence in the fluid flow which enhances the mixing of exhaust gas and cold flame gas.

In the invention the method includes the step of producing cold flame gas in a cold flame gas generator. As explained above, cold flame generators are well known to the skilled person in the art.

In the invention the method includes the step of storing the cold flame gas, which has been produced by the cold flame gas generator, in a reservoir. As explained above, the reservoir may be configured as an inline conduit with a larger diameter as compared to the fluid line connecting the cold flame gas generator and the exhaust gas flow path. Alternatively, the reservoir is configured as larger container. In both cases there may be provided a bypass fluid line such that the cold flame gas may flow directly from the cold flame gas generator to the exhaust gas flow path.

In the invention the method includes the step of heating the cold flame gas which is stored in the reservoir such that the temperature of the cold flame gas is kept above the condensation point of the cold flame gas. As explained above, the heating may be carried out using a heat exchanger which is arranged in fluid communication with the exhaust gas flow path such that the heat energy contained in the exhaust gas can be used to heat the cold flame gas in the reservoir or to keep the cold flame gas at a steady temperature above the condensation point. An alternative for heating or keeping the cold flame gas in the reservoir at a temperature above the condensation point would be to use one or more regular electric heating elements. The cold flame gas generator may also be heated or kept warm in the same way by using heat energy in the exhaust gas or alternatively by using electric heating elements.

In a further embodiment of the invention the method may include the step of returning a part of the exhaust gas flowing in the exhaust gas flow path to the combustion chamber in an EGR-loop. As explained above, the EGR-loop comprises a fluid line connected to the exhaust gas flow path and the combustion chamber. Furthermore, the method includes the step of removing particles in the exhaust gas flowing in the EGR-loop by providing an EGR-loop particle filter in the EGR-loop.

In a further embodiment of the invention the method may include the step of arranging the EGR-loop particle filter in fluid communication with the cold flame gas supply such that the EGR-loop particle filter can be regenerated by the cold flame gas.

In a further embodiment of the invention the method may include the step of providing an exhaust gas flow path particle filter in the exhaust gas flow path.

As for the EGR-loop, the method may further include the step of arranging the exhaust gas flow path particle filter in fluid communication with the cold flame gas supply such that the exhaust gas flow path particle filter can be regenerated by the cold flame gas.

In a further embodiment of the invention the method may include the step of providing an oxidation catalyst in the exhaust flow path downstream the injection of the cold flame gas.

In a further embodiment of the invention the method may include the step of injecting air into the exhaust gas flow path upstream the oxidation catalyst such that the temperature in the oxidation catalyst can be regulated and enough oxygen for the oxidation process in the oxidation catalyst can be ensured.

There is also provided a use of a cold flame gas stored in a reservoir and kept above the condensation point of the cold flame gas to remove impurities, like NOₓ and/or particulate matter (for example soot) and/or hydrocarbons, from an exhaust gas by injecting the cold flame gas into the exhaust gas, where the exhaust gas may originate from a combustion process in for example an internal combustion engine, an incineration plant, a power plant etc.

Below follows a detailed description of with reference to the attached drawings where
Figure 1 discloses a first schematically drawn embodiment, which does not as such form part of the invention.
Figure 2 discloses a second schematically drawn embodiment, which does not as such form part of the invention.
Figure 3 discloses a third schematically drawn embodiment, which does not as such form part of the invention.
Figure 4 discloses a fourth schematically drawn embodiment, which does not as such form part of the invention.
Figure 5 discloses a fifth schematically drawn embodiment, which does not as such form part of the invention.
Figure 6 discloses a sixth schematically drawn embodiment, which does not as such form part of the invention.
Figure 7 discloses a schematically drawn embodiment of the invention.

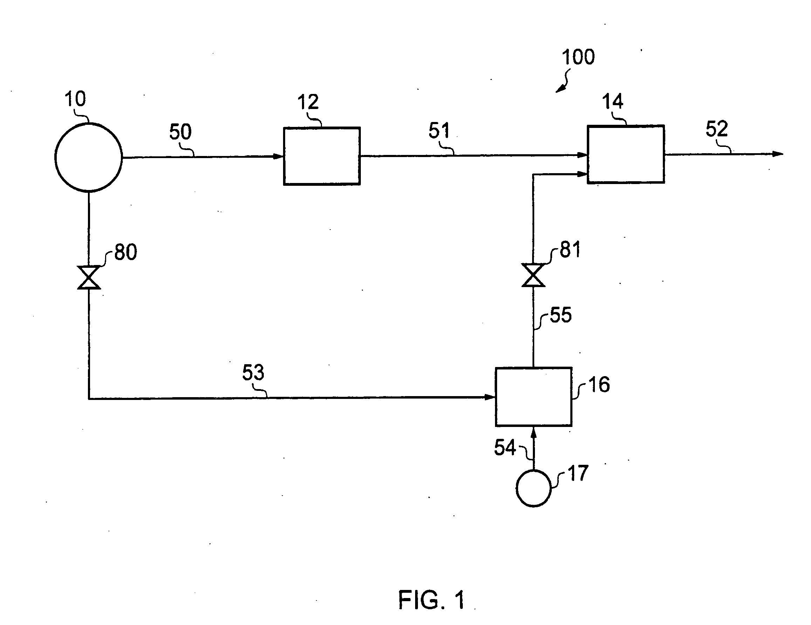

Figure 1 discloses a first embodiment of the exhaust gas cleaning apparatus 100. A fuel tank 10 for a hydrocarbon fuel like diesel fuel is connected to a combustion chamber 12 by fluid line 50. A cold flame gas generator 16 is connected to the fuel tank 10 via fluid line 53. A valve means 80 controls and regulates the flow of fuel from the fuel tank 10 to the cold flame gas generator 16. An air supply 17 is connected to the cold flame gas generator 16 via fluid line 54. Necessary equipment for the air supply 17, like an air compressor, filters or valve means, are not shown on the figures. If the combustible matter being combusted in the combustion chamber 12 is not in liquid or gas form, which may be the case in an incineration plant or a power plant, the exhaust gas cleaning apparatus 100 preferably includes feeding means (not shown in the figures) for feeding the combustible matter into the combustion chamber. In this case, the fuel tank 10 preferably feeds hydrocarbon fuel to the cold flame gas generator 16 only.

A mixing chamber 14 is connected to the combustion chamber 12 via exhaust gas flow path 51. The mixing chamber can be a part of the exhaust gas fluid pipe itself, a fluid line section with increased diameter compared to that of the exhaust gas flow path or a container. The mixing chamber 14 may be provided with mixing means that enhances the mixing of the exhaust gas and the cold flame gas. After the mixing chamber 14, the exhaust gas leaves through exhaust gas flow path 52. Exhaust gas flow paths 51, 52 may be in the form of conduits, pipes, tubes or other suitable means for conducting the exhaust gas. The cold flame gas generator 16 is connected to the mixing chamber 14 via fluid line 55. Valve means 81 controls and regulates the flow of cold flame gas from the cold flame gas generator 16 to the mixing chamber 14.

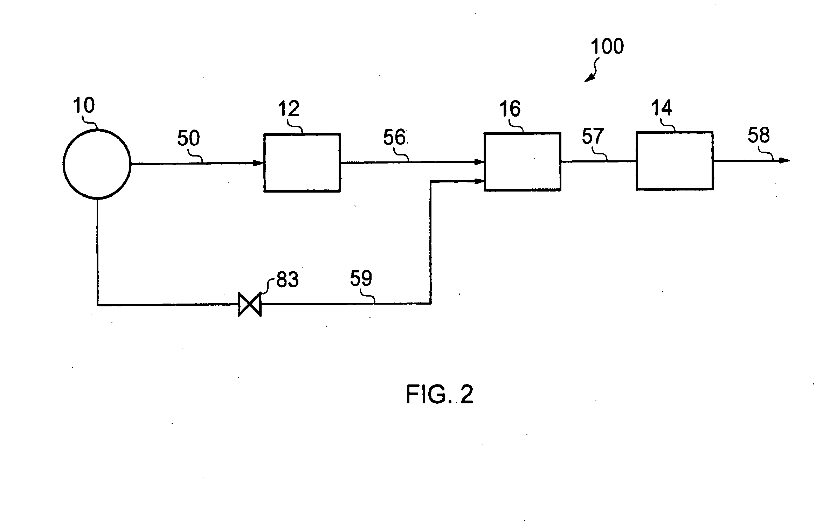

Figure 2 shows a similar embodiment to the embodiment shown in Figure 1. The cold flame gas generator 16 is in this embodiment provided inline with the exhaust gas flow path between the combustion chamber 12 and the mixing chamber 14. Exhaust gas flow path 56 connects the combustion chamber 12 and the cold flame gas generator 16, while the exhaust gas flow path 57 connects the cold flame gas generator 16 and the mixing chamber 14. It is also possible to combine the cold flame gas generator 16 and the mixing chamber 14 into one unit. The exhaust gas flow path 57 is then redundant. The oxygen necessary in the production of the cold flame gas is supplied through air in the exhaust gas. Furthermore, a supply fluid line 59 provides fuel to the cold flame gas generator 16. Valve means 83 controls and regulates the flow of fuel from the fuel tank 10 to the cold flame gas generator 16.

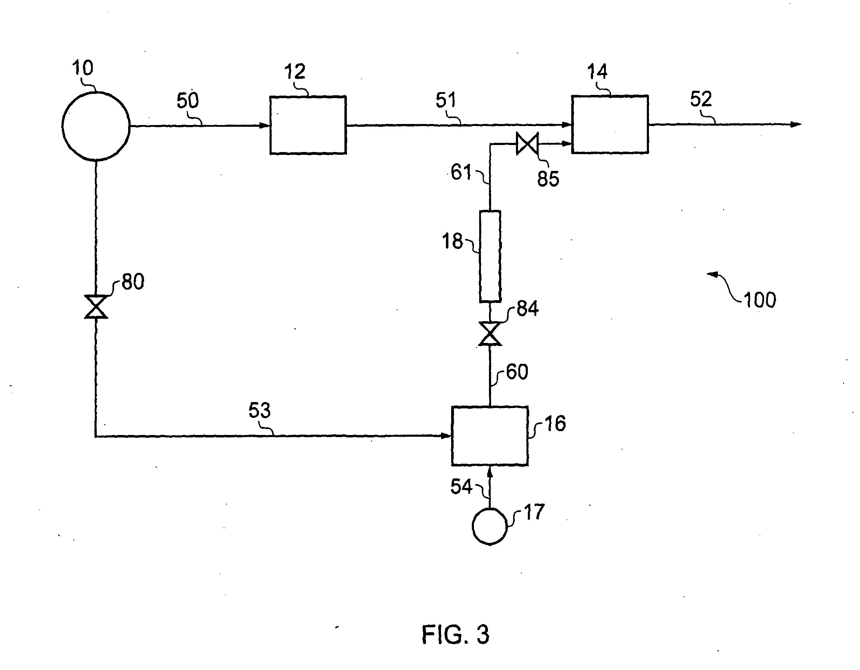

Figure 3 shows an embodiment of the exhaust gas cleaning apparatus 100 where there is provided a reservoir 18 for cold flame gas. Providing the reservoir 18 ensures that there are sufficient reserves of cold flame gas available when that is necessary, for example during full admission of a combustion engine. The reservoir shown in this embodiment of the invention is an inline reservoir which may be formed by a length of pipe, tube or similar which has a larger diameter than the fluid lines 60, 61. As before, the combustion chamber 12 is connected to the fuel tank 10 via fluid line 50 and to the mixing chamber 14 via exhaust gas flow path 51. The cold flame gas generator 16 is connected to the fuel tank 10 via fluid line 53 and to the reservoir 18 via fluid line 60. If the combustible matter being combusted in the combustion chamber 12 is not in liquid or gas form, which may be the case in an incineration plant or a power plant, the exhaust gas cleaning apparatus 100 preferably includes feeding means (not shown in the figures) for feeding the combustible matter into the combustion chamber. In this case, the fuel tank 10 preferably feeds hydrocarbon fuel to the cold flame gas generator 16 only.

The reservoir is connected to the mixing chamber 14 via fluid line 61. Valve means 80 controls and regulates the flow of fuel from the fuel tank 10 to the cold flame gas generator 16. Valve means 84 controls and regulates the flow of cold flame gas from the cold flame gas generator 16 to the reservoir 18, while valve means 85 controls and regulates the flow of cold flame gas from the reservoir 18 to the mixing chamber 14. As before, the cold flame gas generator is connected to an air supply 17 via fluid line 54 and the exhaust gas leaves the mixing chamber 14 through exhaust gas flow path 52 after being cleaned.

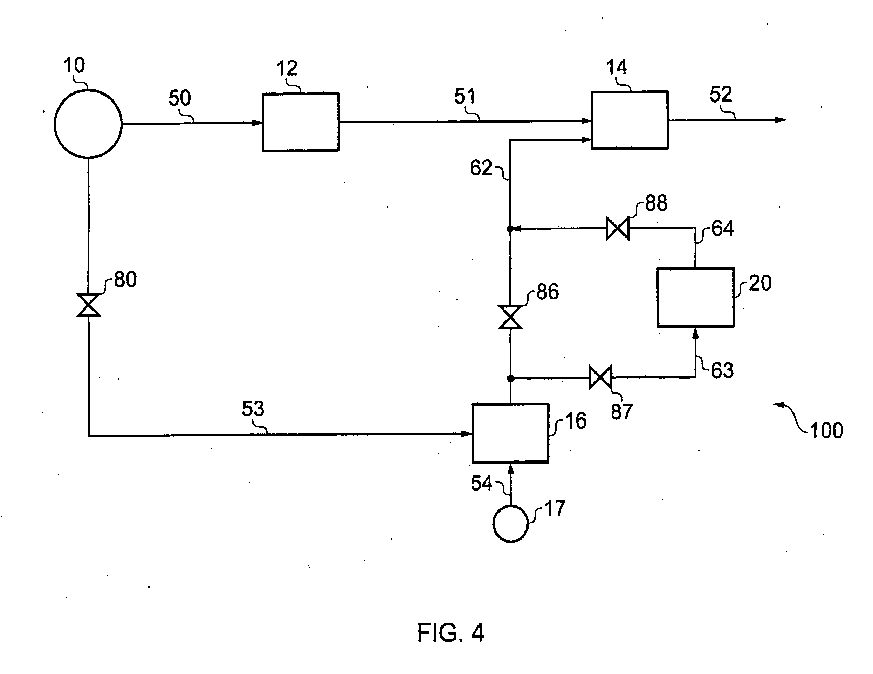

Figure 4 shows an embodiment of the exhaust gas cleaning apparatus 100 with a reservoir 20 for the cold flame gas. The cold flame gas generator 16 is connected to the mixing chamber 14 via fluid line 62. The reservoir 20 is connected to the cold flame gas generator 16 via fluid line 63 which is connected to fluid line 62, as shown in the figure, or directly to the cold flame gas generator 16. Valve means 87 controls and regulates the flow of fluid from the cold flame gas generator 16 to the reservoir 20. The reservoir 20 is connected to the mixing chamber 14 via fluid line 64 which is connected to fluid line 62, as shown in the figure, or directly to the mixing chamber 14. Valve means 88 controls and regulates the flow of cold flame gas from the reservoir 20 to the mixing chamber 14. Valve means 86 controls and regulates the flow of cold flame gas through flow line 62 directly to the mixing chamber 14. Thus, if valve means 87, 88 are closed, the fluid line 62 can act as a bypass fluid line for the reservoir 20. The remaining features shown on Figure 4 are the same as described above and will not be repeated here.

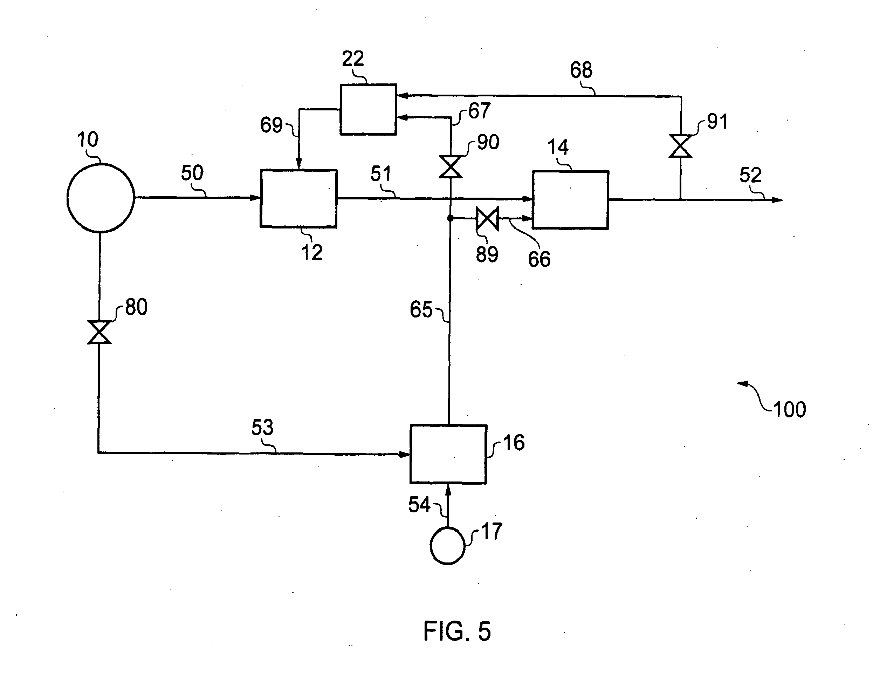

Figure 5 shows an embodiment of the exhaust gas cleaning apparatus 100 in which there is included an EGR-loop 68. As before, the fuel tank 10 is connected to the combustion chamber 12 via fluid line 50. The combustion chamber 12 is connected to the mixing chamber 14 via exhaust gas flow path 51. After the mixing chamber 14 the exhaust gas leaves through the exhaust gas flow path 52. The cold flame gas generator 16 is connected to the fuel tank 10 via fluid line 53 and valve means 80 controls and regulates the flow of hydrocarbon fuel to the cold flame gas generator 16. The air supply 17 supplies air to the cold flame generator 16 through fluid line 54. If the combustible matter being combusted in the combustion chamber 12 is not in liquid or gas form, which may be the case in an incineration plant or a power plant, the exhaust gas cleaning apparatus 100 preferably includes feeding means (not shown in the figures) for feeding the combustible matter into the combustion chamber. In this case, the fuel tank 10 preferably feeds hydrocarbon fuel to the cold flame gas generator 16 only.

The cold flame gas generator 16 is connected to the mixing chamber 14 through fluid lines 65 and 66. Valve means 89 controls and regulates the flow of cold flame gas from the cold flame gas generator 16 to the mixing chamber 14. The EGR-loop, in its simplest form, includes a fluid line 68 which is connected to the exhaust gas flow path 52, as shown on the figure, or alternatively to exhaust gas flow path 51, and to the combustion chamber 12 (this is not shown on the figure) such that a portion of the exhaust gas can be returned to the combustion chamber 12. Valve means 91 controls and regulates the flow of exhaust gas through the EGR-loop. The EGR-loop shown on figure 5, also includes a EGR-loop particle filter 22 for removal of any particulate matter like soot, which may be present in the exhaust gas. The particle filter is connected to the exhaust gas flow path 51, 52 via the above mentioned fluid line 68 and to the combustion chamber 12 via fluid line 69. Furthermore, a fluid line 67 connects the EGR-loop particle filter 22 to the fluid line 65 and thereby the cold flame generator 16, such that the EGR-loop particle filter 22 may be regenerated when it is becoming clogged by soot. Valve means 90 controls and regulates the flow of cold flame gas from the cold flame gas generator 16 to the EGR-loop particle filter 22.

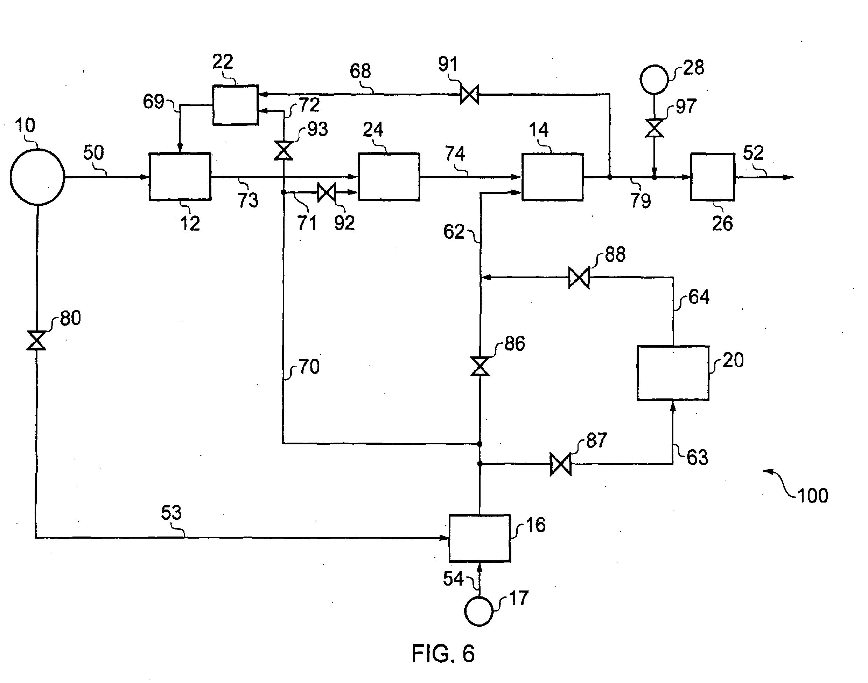

Figure 6 shows an embodiment of the exhaust gas cleaning apparatus 100 in which includes a reservoir 20 as described in connection with the embodiment shown in figure 4, an EGR-loop as described in connection with the embodiment shown in figure 5, cold flame gas generator 16 as described in connection with all embodiments except the embodiment in figure 2 and a combustion chamber 12 and a mixing chamber 14 as described in connection with the embodiment shown on for example figure 1. These features will therefore not be explained again. The embodiment shown on figure 6 does also includes an exhaust gas flow path particle filter 24 connected to the combustion chamber 12 via exhaust gas flow path 73 and to the mixing chamber 14 via exhaust gas flow path 74. The exhaust gas flow path particle filter 24 is also connected to the cold flame gas generator via fluid lines 70 and 71 such that regeneration of the exhaust gas flow path particle filter 24 may take place when the exhaust gas flow path particle filter 24 gets clogged by soot. Valve means 92 controls the flow of cold flame gas from the cold flame gas generator 16 to the exhaust gas flow path particle filter 24. The EGR-loop particle filter 22 is connected to the cold flame gas generator 16 via fluid lines 70 and 72 for regeneration of the EGR-loop particle filter 22 when it is clogged by soot. Valve means 93 controls and regulates the flow of cold flame gas from the cold flame gas generator 16 to the EGR-loop particle filter 22. In this embodiment of the exhaust gas cleaning apparatus 100 there is also included an oxidation catalyst 26 arranged downstream the mixing chamber 14. The oxidation catalyst 26 oxidizes substances like hydrocarbons and CO which may still be present in the exhaust gas after the mixing chamber 14. Furthermore, an air supply 28 may be connected to exhaust gas flow path 79 such that air can be fed into the exhaust gas before entering the oxidation catalyst 26. The addition of air can be used to control the temperature in the oxidation catalyst 26 and to ensure that there is enough oxygen present for the oxidation process. Valve means 97 controls and regulates the flow of air into the exhaust gas flow path 79.

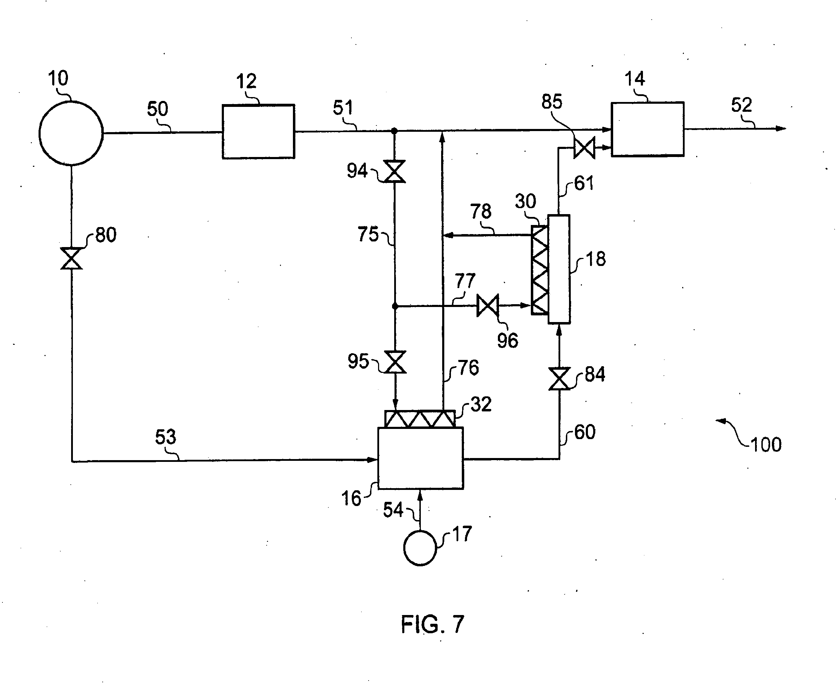

Figure 7 shows an embodiment according to the invention of the exhaust gas cleaning apparatus 100 which is similar to the embodiment shown on figure 3. The embodiment in figure 7 does, however, include heating means 30 for the reservoir 18 and heating means 32 for the cold flame gas generator 16. The heating means 30, 32 may, as shown in this embodiment of the invention, be heat exchangers which utilizes the heat energy in the exhaust gas to heat the cold flame gas in the reservoir 18 or the cold flame gas generator 16. The heating means 32 is connected to the exhaust gas flow path 51, as shown on the figure, or alternatively to exhaust gas flow path 52, via fluid lines 75 and 77 for incoming exhaust gas and fluid lines 78 and 76 for outgoing exhaust gas. Valve means 96 controls and regulates the flow of exhaust gas through the heating means 30 based on the temperature of the cold flame gas in the reservoir 18, which must be kept above the condensation point for the cold flame gas. Similarly, the heating means 32 is connected to the exhaust gas flow path 51, or alternatively exhaust gas flow path 52, by fluid line 75 for incoming exhaust gas and fluid line 76 for outgoing exhaust gas. Valve means 95 controls and regulates the flow of exhaust gas through the heating means 32. Valve means 94 may also be included. The other features shown on figure 7 are explained in connection with the embodiment shown on figure 3 and will not be repeated here.

All the embodiments of the invention shown in the figures include, although not shown on the figures, a control unit which registers temperature, pressure and other relevant measurements and controls the valve means and other functions of the exhaust gas cleaning apparatus 100 which are controllable, based on the measurements.

Furthermore, features which are not relevant for the invention as such are not shown on figures for the sake of clarity. A skilled person in the art will, however, immediately be able to add such features when applying the features of the present invention.

## Claims

1. Exhaust gas cleaning apparatus (100) for cleaning of exhaust gas which originates from a combustion process in a combustion chamber (12), the exhaust gas cleaning apparatus (100) comprising an exhaust gas flow path (50, 51, 52, 56, 57, 73, 74, 79) which is connectable to the combustion chamber (12) and which is arranged in fluid communication with the combustion chamber (12) and through which the exhaust gas is flowing,
wherein the exhaust gas cleaning apparatus (100) further comprises a cold flame gas supply (16, 18, 20) which provides a cold flame gas, and that the cold flame gas supply (16, 18, 20) is arranged in fluid communication with the exhaust gas flow path (50, 51, 52, 56, 57, 73, 74, 79) such that the cold flame gas can be injected into the exhaust gas flowing in the exhaust gas flow path (50, 51, 52, 56, 57, 73, 74, 79) and thereby, at least partly, remove impurities which are present in the exhaust gas, wherein the cold flame gas supply (16, 18, 20) comprises a cold flame gas generator (16) which is arranged in fluid communication with the exhaust gas flow path (50, 51, 52, 56, 57, 73, 74, 79), **characterized in that** the cold flame gas supply (16, 18, 20) comprises a reservoir (18, 20) for cold flame gas, the reservoir (18, 20) being arranged in fluid communication with the cold flame gas generator (16) and the exhaust gas flow path (50, 51, 52, 56, 57, 73, 74, 79) and that the reservoir (18, 20) comprises heating means (30) such that the temperature of the cold flame gas which is stored in the reservoir (18, 20) is kept above the condensation point of the cold flame gas.

2. Exhaust gas cleaning apparatus according to claim 1,
**characterized in that** exhaust gas flow path (50, 51, 52, 56, 57, 73, 74, 79) is provided with a mixing chamber (14) through which the exhaust gas flows and in which the cold flame gas and the exhaust gas is mixed.

3. Exhaust gas cleaning apparatus according to any one of the claims 1-2,
**characterized in that** the mixing chamber (14) is provided with mixing means for enhanced mixing of the exhaust gas and the cold flame gas.

4. Exhaust gas cleaning apparatus according to claim 1,
**characterized in that** the heating means comprises a heat exchanger wherein the cold flame gas is heated by the exhaust gas.

5. Exhaust gas cleaning apparatus according to any one of the claims 1-4,
**characterized in that** exhaust gas cleaning apparatus (100) further comprises an EGR-loop through which a part of the exhaust gas flowing in the exhaust flow path (50, 51, 52, 56, 57, 73, 74, 79) is returned to the combustion chamber (12).

6. Exhaust gas cleaning apparatus according to claim 5,
**characterized in that** the EGR-loop comprises a EGR-loop particle filter (22).

7. Exhaust gas cleaning apparatus according to claim 6,
**characterized in that** the EGR-loop particle filter (22) is arranged in fluid communication with the cold flame gas supply (16, 18, 20) such that the EGR-loop particle filter (22) can be regenerated by the cold flame gas.

8. Exhaust gas cleaning apparatus according to any one of the claims 1-7,
**characterized in that** exhaust gas flow path (50, 51, 52, 56, 57, 73, 74, 79) is provided with an exhaust gas flow path particle filter (24) such that the exhaust gas flows through the exhaust gas flow path particle filter (24) before the cold flame gas is injected into the exhaust gas flow path.

9. Exhaust gas cleaning apparatus according to claim 8,
**characterized in that** the exhaust gas flow path particle filter (24) is arranged in fluid communication with the cold flame gas supply (16, 18, 20) such that the exhaust gas flow path particle filter (24) can be regenerated by the cold flame gas.

10. Exhaust gas cleaning apparatus according to claim 1,
**characterized in that** the cold flame gas generator (16) is arranged in the exhaust gas flow path.

11. Method for cleaning an exhaust gas originating from a combustion process in a combustion chamber (12), and where the exhaust gas is flowing in an exhaust gas flow path (50, 51, 52, 56, 57, 73, 74, 79) which is arranged in fluid communication with the combustion chamber,
wherein the method includes the steps of
- providing a cold flame gas, and
- injecting the cold flame gas into the exhaust gas flowing in the exhaust gas flow path,
whereby impurities, which are present in the exhaust gas, are, at least partly, removed from the exhaust gas
**characterized in that** the method includes the steps of
- producing cold flame gas in a cold flame gas generator (16),
- storing the cold flame gas, which has been produced by the cold flame gas generator, in a reservoir (18, 20), and
- heating the cold flame gas which is stored in the reservoir (18, 20) such that the temperature of the cold flame gas is kept above the condensation point of the cold flame gas.

12. Method according to claim 11,
wherein the method includes the step of providing a mixing chamber (14) through which the exhaust gas is flowing and injecting the cold flame gas such that that the cold flame gas and the exhaust gas in the mixing chamber (14).

13. Method according to any one of the claims 11-12,
wherein the method includes the step of providing mixing means for enhanced mixing of the exhaust gas and the cold flame gas.

14. Method according to any one of the claims 11-13,
wherein the method includes the step of returning a part of the exhaust gas flowing in the exhaust gas flow path (50, 51, 52, 56, 57, 73, 74, 79) to the combustion chamber (12) in an EGR-loop.

15. Method according to claim 14,
wherein the method includes the step of removing particles in the exhaust gas flowing in the EGR-loop by providing an EGR-loop particle filter (22) in the EGR-loop.

16. Method according to claim 15,
wherein the method includes the step of arranging the EGR-loop particle filter (22) in fluid communication with the cold flame gas supply (16, 18, 20) such that the EGR-loop particle filter can be regenerated by the cold flame gas.

17. Method according to any one of the claims 11-16,
wherein the method includes the step of providing an exhaust gas flow path particle filter (24) in the exhaust gas flow path (50, 51, 52, 56, 57, 73, 74, 79).

18. Method according to claim 17,
wherein the method includes the step of arranging the exhaust gas flow path particle filter (24) in fluid communication with the cold flame gas supply (16, 18, 20) such that the exhaust gas flow path particle filter (24) can be regenerated by the cold flame gas.

19. Use of a cold flame gas stored in a reservoir and kept above the condensation point of the cold flame gas to remove impurities which are present in an exhaust gas by injecting the cold flame gas into the exhaust gas.

## Patentansprüche

1. Abgasreinigungsvorrichtung (100) für das Reinigen von Abgas, das von einem Verbrennungsvorgang in einer Brennkammer (12) stammt, wobei die Abgasreinigungsvorrichtung (100) einen Abgasströmungsweg (50, 51, 52, 56, 57, 73, 74, 79) aufweist, der mit der Brennkammer (12) verbunden werden kann, und der in Fluidverbindung mit der Brennkammer (12) angeordnet ist, und durch den das Abgas strömt,
wobei die Abgasreinigungsvorrichtung (100) außerdem eine Kaltflammengaszufuhr (16, 18, 20) aufweist, die ein Kaltflammengas liefert, und wobei die Kaltflammengaszufuhr (16, 18, 20) in Fluidverbindung mit dem Abgasströmungsweg (50, 51, 52, 56, 57, 73, 74, 79) angeordnet ist, so dass das Kaltflammengas in das Abgas eingespritzt werden kann, das im Abgasströmungsweg (50, 51, 52, 56, 57, 73, 74, 79) strömt und dadurch mindestens teilweise Verunreinigungen entfernt, die im Abgas vorhanden sind, wobei die Kaltflammengaszufuhr (16, 18, 20) einen Kaltflammengasgenerator (16) aufweist, der in Fluidverbindung mit dem Abgasströmungsweg (50, 51, 52, 56, 57, 73, 74, 79) angeordnet ist,
**dadurch gekennzeichnet, dass** die Kaltflammengaszufuhr (16, 18, 20) einen Behälter (18, 20) für das Kaltflammengas aufweist, wobei der Behälter (18, 20) in Fluidverbindung mit dem Kaltflammengasgenerator (16) und dem Abgasströmungsweg (50, 51, 52, 56, 57, 73, 74, 79) angeordnet ist, und dadurch, dass der Behälter (18, 20) ein Heizmittel (30) aufweist, so dass die Temperatur des Kaltflammengases, das im Behälter (18, 20) gespeichert wird, über der Kondensationstemperatur des Kaltflammengases gehalten wird.

2. Abgasreinigungsvorrichtung nach Anspruch 1,
**dadurch gekennzeichnet, dass** der Abgasströmungsweg (50, 51, 52, 56, 57, 73, 74, 79) mit einer Mischkammer (14) versehen ist, durch die das Abgas strömt, und in der das Kaltflammengas und das Abgas gemischt werden.

3. Abgasreinigungsvorrichtung nach einem der Ansprüche 1 bis 2,
**dadurch gekennzeichnet, dass** die Mischkammer (14) mit einem Mischmittel für das verbesserte Mischen des Abgases und des Kaltflammengases versehen ist.

4. Abgasreinigungsvorrichtung nach Anspruch 1,
**dadurch gekennzeichnet, dass** das Heizmittel einen Wärmetauscher aufweist, worin das Kaltflammengas durch das Abgas erwärmt wird.

5. Abgasreinigungsvorrichtung nach einem der Ansprüche 1 bis 4,
**dadurch gekennzeichnet, dass** die Abgasreinigungsvorrichtung (100) außerdem eine AGR-Schleife (Abgasrückführungsschleife) aufweist, durch die ein Teil des Abgases, das im Abgasströmungsweg (50, 51, 52, 56, 57, 73, 74, 79) strömt, zur Brennkammer (12) zurückgeführt wird.

6. Abgasreinigungsvorrichtung nach Anspruch 5,
**dadurch gekennzeichnet, dass** die AGR-Schleife einen Partikelfilter (22) für die AGR-Schleife aufweist.

7. Abgasreinigungsvorrichtung nach Anspruch 6,
**dadurch gekennzeichnet, dass** der Partikelfilter (22) für die AGR-Schleife in Fluidverbindung mit der Kaltflammengaszufuhr (16, 18, 20) angeordnet ist, so dass der Partikelfilter (22) für die AGR-Schleife durch das Kaltflammengas regeneriert werden kann.

8. Abgasreinigungsvorrichtung nach einem der Ansprüche 1 bis 7,
**dadurch gekennzeichnet, dass** der Abgasströmungsweg (50, 51, 52, 56, 57, 73, 74, 79) mit einem Partikelfilter (24) für den Abgasströmungsweg versehen ist, so dass das Abgas durch den Partikelfilter (24) für den Abgasströmungsweg strömt, bevor das Kaltflammengas in den Abgasströmungsweg eingespritzt wird.

9. Abgasreinigungsvorrichtung nach Anspruch 8,
**dadurch gekennzeichnet, dass** der Partikelfilter (24) für den Abgasströmungsweg in Fluidverbindung mit der Kaltflammengaszufuhr (16, 18, 20) angeordnet ist, so dass der Partikelfilter (24) für den Abgasströmungsweg durch das Kaltflammengas regeneriert werden kann.

10. Abgasreinigungsvorrichtung nach Anspruch 1,
**dadurch gekennzeichnet, dass** der Kaltflammengasgenerator (16) im Abgasströmungsweg angeordnet ist.

11. Verfahren zum Reinigen eines Abgases, das von einem Verbrennungsvorgang in einer Brennkammer (12) stammt, und wobei das Abgas in einem Abgasströmungsweg (50, 51, 52, 56, 57, 73, 74, 79) strömt, der in Fluidverbindung mit der Brennkammer angeordnet ist,
wobei das Verfahren die folgenden Schritte umfasst:
- Bereitstellen eines Kaltflammengases; und
- Einspritzen des Kaltflammengases in das Abgas, das im Abgasströmungsweg strömt,
wodurch Verunreinigungen, die im Abgas vorhanden sind, mindestens teilweise aus dem Abgas entfernt werden,
**dadurch gekennzeichnet, dass** das Verfahren die folgenden Schritte umfasst:
- Erzeugen von Kaltflammengas in einem Kaltflammengasgenerator (16);
- Speichern des Kaltflammengases, das vom Kaltflammengasgenerator erzeugt wurde, in einem Behälter (18, 20); und
- Erwärmen des Kaltflammengases, das im Behälter (18, 20) gespeichert wird, so dass die Temperatur des Kaltflammengases über der Kondensationstemperatur des Kaltflammengases gehalten wird.

12. Verfahren nach Anspruch 11, wobei das Verfahren die Schritte des Bereitstellens einer Mischkammer (14), durch die das Abgas strömt, und des Einspritzens des Kaltflammengases umfasst, so dass das Kaltflammengas und das Abgas in der Mischkammer (14) gemischt werden.

13. Verfahren nach einem der Ansprüche 11 bis 12, wobei das Verfahren den Schritt des Bereitstellens eines Mischmittels für ein verbessertes Mischen des Abgases und des Kaltflammengases umfasst.

14. Verfahren nach einem der Ansprüche 11 bis 13, wobei das Verfahren den Schritt des Rückführens eines Teils des Abgases, das im Abgasströmungsweg (50, 51, 52, 56, 57, 73, 74, 79) strömt, zur Brennkammer (12) in einer AGR-Schleife umfasst.

15. Verfahren nach Anspruch 14, wobei das Verfahren den Schritt des Entfernens von Partikeln im Abgas, das in der AGR-Schleife strömt, durch Bereitstellen eines Partikelfilters (22) für die AGR-Schleife in der AGR-Schleife umfasst.

16. Verfahren nach Anspruch 15, wobei das Verfahren den Schritt des Anordnens des Partikelfilters (22) für die AGR-Schleife in Fluidverbindung mit der Kaltflammengaszufuhr (16, 18, 20) umfasst, so dass der Partikelfilter für die AGR-Schleife durch das Kaltflammengas regeneriert werden kann.

17. Verfahren nach einem der Ansprüche 11 bis 16, wobei das Verfahren den Schritt des Bereitstellens eines Partikelfilters (24) für den Abgasströmungsweg im Abgasströmungsweg (50, 51, 52, 56, 57, 73, 74, 79) umfasst.

18. Verfahren nach Anspruch 17, wobei das Verfahren den Schritt des Anordnens des Partikelfilters (24) für den Abgasströmungsweg in Fluidverbindung mit der Kaltflammengaszufuhr (16, 18, 20) umfasst, so dass der Partikelfilter (24) für den Abgasströmungsweg durch das Kaltflammengas regeneriert werden kann.

19. Verwenden eines Kaltflammengases, das in einem Behälter gespeichert und über der Kondensationstemperatur des Kaltflammengases gehalten wird, um Verunreinigungen zu entfernen, die in einem Abgas vorhanden sind, indem das Kaltflammengas in das Abgas eingespritzt wird.

## Revendications

1. Appareil de nettoyage de gaz d'échappement (100) permettant de nettoyer un gaz d'échappement qui provient d'un processus de combustion dans une chambre de combustion (12), l'appareil de nettoyage de gaz d'échappement (100) comprenant un circuit d'écoulement de gaz d'échappement (50, 51, 52, 56, 57, 73, 74, 79) qui peut être raccordé à la chambre de combustion (12) et qui est agencé en communication fluidique avec la chambre de combustion (12) et à travers lequel s'écoule le gaz d'échappement,
dans lequel l'appareil de nettoyage de gaz d'échappement (100) comprend en outre une alimentation de gaz à flamme froide (16, 18, 20) qui fournit un gaz à flamme froide, et l'alimentation de gaz à flamme froide (16, 18, 20) est agencée en communication fluidique avec le circuit d'écoulement de gaz d'échappement (50, 51, 52, 56, 57, 73, 74, 79) de telle manière que le gaz à flamme froide peut être injecté dans le gaz d'échappement circulant dans le circuit d'écoulement de gaz d'échappement (50, 51, 52, 56, 57, 73, 74, 79) et élimine ainsi, au moins partiellement, des impuretés qui sont présentes dans le gaz d'échappement, dans lequel l'alimentation de gaz à flamme froide (16, 18, 20) comprend un générateur de gaz à flamme froide (16) qui est agencé en communication fluidique avec le circuit d'écoulement de gaz d'échappement (50, 51, 52, 56, 57, 73, 74, 79), **caractérisé en ce que** l'alimentation de gaz à flamme froide (16, 18, 20) comprend un réservoir (18, 20) pour gaz à flamme froide, le réservoir (18, 20) étant agencé en communication fluidique avec le générateur de gaz à flamme froide (16) et le circuit d'écoulement de gaz d'échappement (50, 51, 52, 56, 57, 73, 74, 79), et **en ce que** le réservoir (18, 20) comprend un moyen de chauffage (30) de telle manière que la température du gaz à flamme froide qui est stocké dans le réservoir (18, 20) est maintenue au-dessus du point de condensation du gaz à flamme froide.

2. Appareil de nettoyage de gaz d'échappement selon la revendication 1,
**caractérisé en ce que** le circuit d'écoulement de gaz d'échappement (50, 51, 52, 56, 57, 73, 74, 79) est muni d'une chambre de mélange (14) à travers laquelle circule le gaz d'échappement et dans laquelle sont mélangés le gaz à flamme froide et le gaz d'échappement.

3. Appareil de nettoyage de gaz d'échappement selon la revendication 1 ou 2,
**caractérisé en ce que** la chambre de mélange (14) est munie d'un moyen de mélange permettant un mélange amélioré du gaz d'échappement et du gaz à flamme froide.

4. Appareil de nettoyage de gaz d'échappement selon la revendication 1,
**caractérisé en ce que** le moyen de chauffage comprend un échangeur thermique dans lequel le gaz à flamme froide est chauffé par le gaz d'échappement.

5. Appareil de nettoyage de gaz d'échappement selon l'une quelconque des revendications 1 à 4,
**caractérisé en ce que** l'appareil de nettoyage de gaz d'échappement (100) comprend en outre une boucle EGR à travers laquelle une partie du gaz d'échappement circulant dans le circuit d'écoulement de gaz d'échappement (50, 51, 52, 56, 57, 73, 74, 79) est renvoyée vers la chambre de combustion (12).

6. Appareil de nettoyage de gaz d'échappement selon la revendication 5,
**caractérisé en ce que** la boucle EGR comprend un filtre à particules (22) de boucle EGR.

7. Appareil de nettoyage de gaz d'échappement selon la revendication 6,
**caractérisé en ce que** le filtre à particules (22) de boucle EGR est agencé en communication fluidique avec l'alimentation de gaz à flamme froide (16, 18, 20) de telle manière que le filtre à particules (22) de boucle EGR peut être régénéré par le gaz à flamme froide.

8. Appareil de nettoyage de gaz d'échappement selon l'une quelconque des revendications 1 à 7,
**caractérisé en ce que** le circuit d'écoulement de gaz d'échappement (50, 51, 52, 56, 57, 73, 74, 79) est muni d'un filtre à particules (24) de circuit d'écoulement de gaz d'échappement de telle manière que le gaz d'échappement circule à travers le filtre à particules (24) de circuit d'écoulement de gaz d'échappement avant que le gaz à flamme froide soit injecté dans le circuit d'écoulement de gaz d'échappement.

9. Appareil de nettoyage de gaz d'échappement selon la revendication 8,
**caractérisé en ce que** le filtre à particules (24) de circuit d'écoulement de gaz d'échappement est agencé en communication fluidique avec l'alimentation de gaz à flamme froide (16, 18, 20) de telle manière que le filtre à particules (24) de circuit d'écoulement de gaz d'échappement peut être régénéré par le gaz à flamme froide.

10. Appareil de nettoyage de gaz d'échappement selon la revendication 1,
**caractérisé en ce que** le générateur de gaz à flamme froide (16) est agencé dans le circuit d'écoulement de gaz d'échappement.

11. Procédé de nettoyage d'un gaz d'échappement provenant d'un processus de combustion dans une chambre de combustion (12), et dans lequel le gaz d'échappement circule dans un circuit d'écoulement de gaz d'échappement (50, 51, 52, 56, 57, 73, 74, 79) qui est agencé en communication fluidique avec la chambre de combustion,
dans lequel le procédé comprend les étapes consistant à
- fournir un gaz à flamme froide, et
- injecter le gaz à flamme froide dans le gaz d'échappement circulant dans le circuit d'écoulement de gaz d'échappement,
grâce à quoi des impuretés présentes dans le gaz d'échappement sont, au moins partiellement, retirées du gaz d'échappement
**caractérisé en ce que** le procédé comprend les étapes consistant à
- produire un gaz à flamme froide dans un générateur de gaz à flamme froide (16),
- stocker le gaz à flamme froide, qui a été produit par le générateur de gaz à flamme froide, dans un réservoir (18, 20), et
- chauffer le gaz à flamme froide qui est stocké dans le réservoir (18, 20) de telle manière que la température du gaz à flamme froide est maintenue au-dessus du point de condensation du gaz à flamme froide.

12. Procédé selon la revendication 11,
dans lequel le procédé comprend l'étape consistant à fournir une chambre de mélange (14) à travers laquelle le gaz d'échappement circule et injecter le gaz à flamme froide de telle manière que le gaz à flamme froide et le gaz d'échappement sont mélangés dans la chambre de mélange (14).

13. Procédé selon la revendication 11 ou 12,
dans lequel le procédé comprend l'étape consistant à fournir un moyen de mélange pour un mélange amélioré du gaz d'échappement et du gaz à flamme froide.

14. Procédé selon l'une quelconque des revendications 11 à 13,
dans lequel le procédé comprend l'étape consistant à renvoyer une partie du gaz d'échappement circulant dans le circuit d'écoulement de gaz d'échappement (50, 51, 52, 56, 57, 73, 74, 79) vers la chambre de combustion (12) en une boucle EGR.

15. Procédé selon la revendication 14,
dans lequel le procédé comprend l'étape consistant à retirer des particules présentes dans le gaz d'échappement circulant dans la boucle EGR en fournissant un filtre à particules de boucle EGR (22) dans la boucle EGR.

16. Procédé selon la revendication 15,
dans lequel le procédé comprend l'étape consistant à agencer le filtre à particule de boucle EGR (22) en communication fluidique avec l'alimentation de gaz à flamme froide (16, 18, 20) de telle manière que le filtre à particule de boucle EGR peut être régénéré par le gaz à flamme froide.

17. Procédé selon l'une quelconque des revendications 11 à 16,
dans lequel le procédé comprend l'étape consistant à fournir un filtre à particules de circuit d'écoulement de gaz d'échappement (24) dans le circuit d'écoulement de gaz d'échappement (50, 51, 52, 56, 57, 73, 74, 79).

18. Procédé selon la revendication 17,
dans lequel le procédé comprend l'étape consistant à agencer le filtre à particules de circuit d'écoulement de gaz d'échappement (24) en communication fluidique avec l'alimentation de gaz à flamme froide (16, 18, 20) de telle manière que le filtre à particules (24) de circuit d'écoulement de gaz d'échappement peut être régénéré par le gaz à flamme froide.

19. Utilisation d'un gaz à flamme froide stocké dans un réservoir et maintenu au-dessus du point de condensation du gaz à flamme froide afin de retirer des impuretés qui sont présentes dans un gaz d'échappement par injection du gaz à flamme froide dans le gaz d'échappement.
